# EUROPEAN PATENT SPECIFICATION

(11) **EP 0 455 712 B1**
(45) Date of publication and mention of the grant of the patent: **26.07.1995**
(21) Application number: 90902764.1
(22) Date of filing: 23.01.1990
(51) Int. Cl.: A01K 1/02, E04H 5/08

(54) **A PIGPEN UNIT AND A METHOD FOR USE THEREOF**
SCHWEINESTALL UND VERWENDUNG DIESES STALLES
PORCHERIE ET UTILISATION D'UNE TELLE PORCHERIE

(30) Priority: 23.01.1989 DK 285/89
(43) Date of publication of application: 13.11.1991
(73) Proprietor: Rasmussen, Leif Kroeyer, DK-5750 Ringe (DK); Rasmussen, Alice, DK-5750 Ringe (DK)
(72) Inventor: Rasmussen, Jan Kroeyer, DK-5750 Ringe (DK)
(86) International application number: DK9000023
(87) International publication number: WO9007872

(56) References cited:
- GB-A- 2 217 567
- US-A- 3 256 858
- US-A- 3 338 213
- US-A- 3 724 424

## Description

The invention relates to a pigpen unit for siting on a fenced-in field area, comprising a covered piggery with an access opening facing a closed yard in extension of the piggery, said yard having a door out to the field.

Pigpens are normally used as the only shelter for pigs which are to be held outdoors. However, such pens are not always sufficient to provide the pigs with the necessary protection against the weather, and especially during the winter they can give rise to the risk of sickness. Therefore, the pigs are taken into closed sties during the winter, with the practical problems which this involves.

Furthermore, there are disadvantages of a practical kind in connection with a single pigsty, such as the risk of the accumulation of manure in the piggery, since this is where the pigs prefer to spend their time, and problems with getting them enclosed without them getting excited and stressed.

From US PS 3,256,858 is known such a pigpen unit with openings under the shed roof and out in the yard. This unit does not provide sufficient protection against the weather, and it precludes the animals from having the run of the earth.

With suitable climatic conditions, the unit would appear to be suitable only for a sow with piglets, and it will not be suitable for the rearing of piglets for slaughtering.

Moreover, from US PS 2,638,870 there is known a pigpen unit comprising an area confined in fields with a piggery and closed feeding yard associated herewith. However, since the unit cannot be operated from a carriage road, it is not rational to work with. To this must be added the fact that one lacks a closed yard in which the pigs which are to be transported for slaughtering can be collected. Instead, attempts have to be made, for example, to collect the pigs during the feeding.

US-A-3,724,424 discloses a pigpen unit for siting on a fenced-in field area, and comprising a covered piggery with an access opening facing out to a closed yard in extension of the piggery, said yard being provided with a door out to the field. The piggery and the yard are built together on a floor which has been built-up on tubular skids.

It is the object of the invention to improve such known pigpen units, and this is achieved in that the piggery is without a floor, and that said closed yard is placed in extension of the piggery, is without a floor and is possibly covered, the pigpen unit being comprising a feeding board with trough placed on the external side of the yard.

First and foremost, what is achieved hereby is a considerable improvement in the conditions for the pigs in the piggery, in that the yard will function as a wind-trap and hereby provide the possibility of maintaining the sufficient temperature inside the piggery. Moreover, the risk of sickness will be able to be reduced considerably, in that a covering, e.g. in the form of a tarpaulin over the yard, can keep this dry in wet weather, so that the pigs can remain effectively sheltered. This provides adequate security against sickness and opens possibilities for the pigs to be able to be kept outdoors the whole year.

Finally, the outside feeding provides security that the pigs leave the piggery and the yard, at least during the feeding, which has many advantages, and particularly that they always completely consume the feed, and that after the feeding they will leave the manure out on the field. In practice, this has proved to be sufficient to be able to keep the yard and the piggery almost completely free of manure.

As disclosed in claim 2, by allowing the piggery, the yard and the feeding board to constitute a lengthwise unit with a straight side wail, it will be possible from the point of view of construction to utilize this to reduce the number of elements, so that only a few side pieces and end pieces are required to construct the unit.

As disclosed in claim 3, by providing the yard with an additional door and having an opening in to the feeding trough in the straight side wall, one will be able to let the pigs in and out of the yard and feed them from one and the same side, which affords a rational pig-keeping operation.

As disclosed in claim 4, by being able to erect and separate the individual units, it will be a simple matter to move the pigpen unit to another field area, whereby a rational utilization of the crop rotation is achieved.

Furthermore, the invention relates to a method for use of a pigpen unit according to the invention, said method being distintive in that the pigpen unit is placed in the field with the straight side wall facing a road, and that the pigpen unit preferable by crop rotation is moved across the road and placed in a similar position along the road in another field.

Therefore, as disclosed in claim 5, it is expedient that the straight side of the pigpen is facing the road, in that this not only enables several pigpen units to be placed along the same road, but also enables the units to be moved over to the opposite side of the road when changing area, without the need of further roadways.

The invention will now be described in more detail with reference to the drawing.
- Fig. 1: shows a perspective view of a pigpen unit according to the invention,
- Fig. 2: shows a section of the piggery - seen in the direction II-II in Fig. 1,
- Fig. 3: shows a section of the yard - seen in the direction III-III in Fig. 1,
- Fig. 4: shows a section of the feeding board - seen in the direction IV-IV in Fig. 1, and
- Fig. 5: shows a plan view of several pigyards and crop areas on each side of a common road.

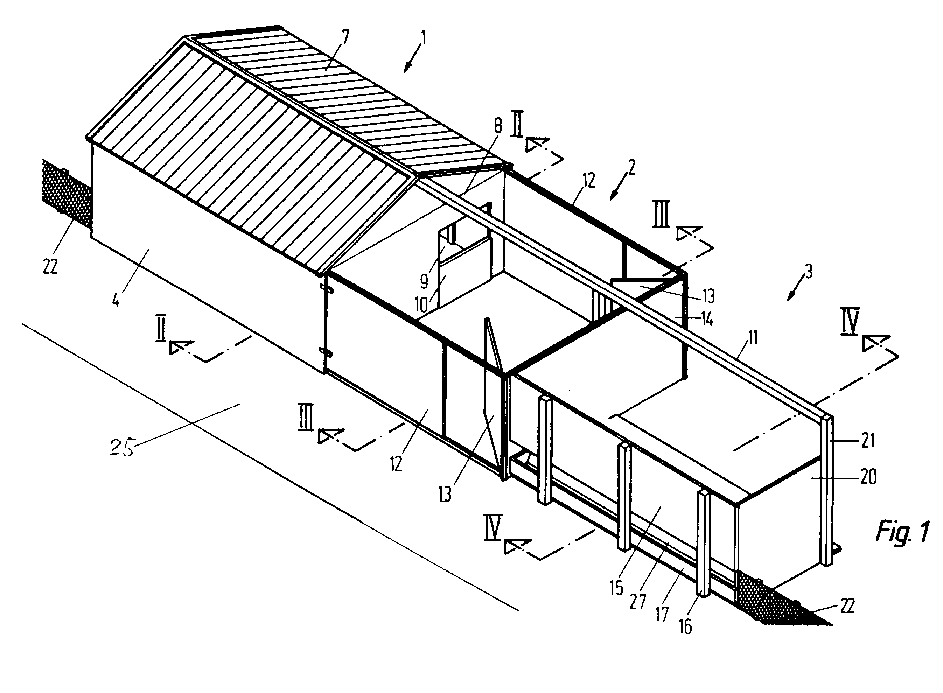

In Fig. 1 is shown an example of a preferred embodiment of a pigpen unit for siting on a field. The unit includes a closed piggery 1 with an opening 10 in the one end 8.

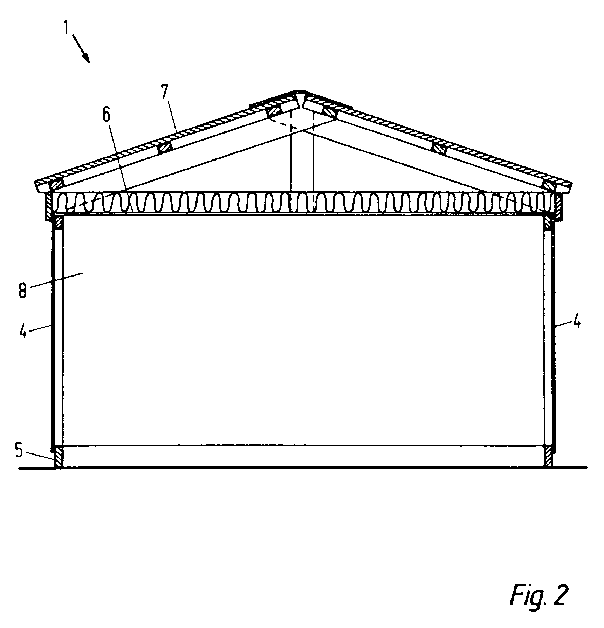

The construction is seen clearly in the sectional drawing Fig. 2. It comprises side walls 4 of plywood 30 sheets, e.g. 12 mm, on horizontally extending beams 5, and with insulated ceiling 6, also of plywood provided with insulation. There is no floor in the piggery. Finally, the roof is built up of rafters with a roof surface 7 which can be of aluminium sheet.

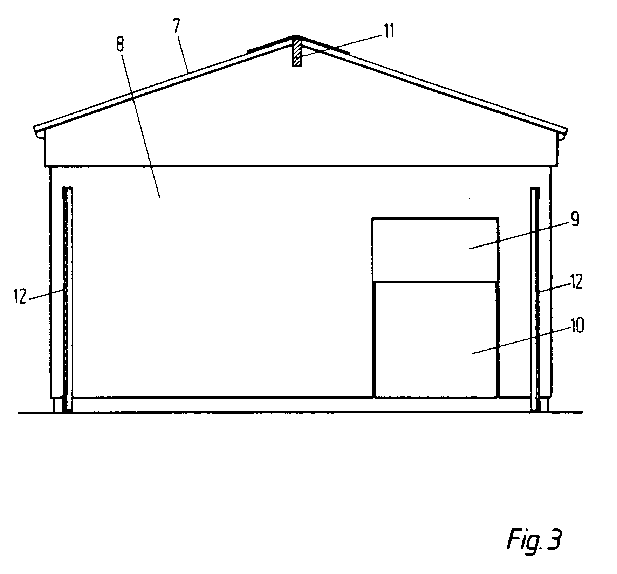

The opening 9 in the end 8 can be provided with a loosely-swinging door plate 10 - see also Fig. 3 - whereby the air change in the piggery can be reduced to suit requirements.

The whole of the piggery is constructed as a self-supporting unit so that it can be lifted, e.g. by means of a forklift truck, and moved to another site.

As shown in Fig. 1, secured to the piggery 1 there is a yard 2 consisting of side walls 12 and an end wall 14, and without a floor.

In the sectional drawing Fig. 3 it is seen that the side walls 12 and the end wall 14 are built up of an angle-iron frame with a vertical post for a hinged door 13. The wall area and the door area can be of 12 mm plywood.

Finally, a perpend 11 is secured to the gable of the end wall 8, said perpend extending over the yard and further out over the feeding board 3.

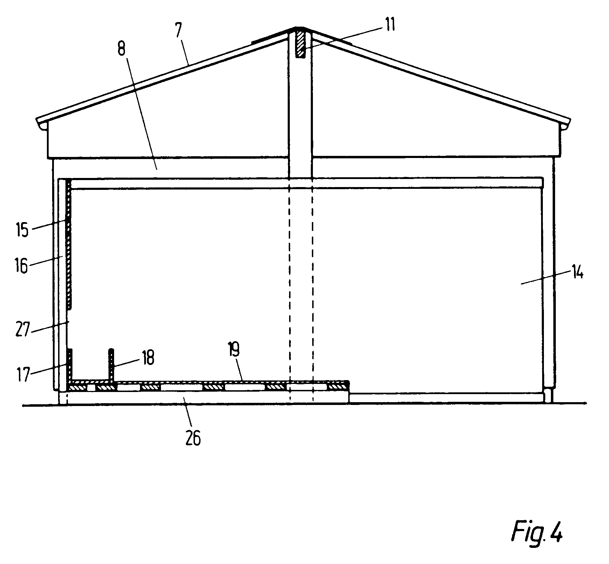

In Fig. 1 it is also seen that the side walls 12 of the yard are coupled to the piggery 1 by means of a pair of brackets which, for example, can be dismantled and mounted by means of a bolt. The yard section 2 can thus be separated from the piggery 1, and the side walls 12 from the end wall 14, so that the yard section can easily be folded together and moved. The feeding board is mounted externally on the yard's end wall 14, as shown in Fig. 1. This section comprises a board plate 19 - see Fig. 4 - which rests on joists, which in turn rest on beams 26. These beams 26 are secured to vertical posts 16 to which a side surface 17 is secured. The plate 17 and the board plate 19 are similarly made of plywood, 12 and 16 mm respectively.

Along the side wall there is built a trough with trough sides 17 and 18 and end sections for the formation of a feedstuff channel, which can easily be reached by the pigs when they are standing on the board plate 19. As shown in Figs. 1 and 4, the plate 17 leaves an opening 27, thus enabling the trough to be filled with feedstuff from outside. In this manner, the pigs are sheltered from three sides while feeding, and no feedstuff is wasted, in that the whole feeding board can be kept free of earth and herewith the mud which the pigs would otherwise create at the feeding trough.

The end of the perpend 11 is supported by a post 21. The object of this perpend is to be able to bear a not-shown covering, e.g. a tarpaulin, when there is need for a cover over the yard and the feeding area. The washing-out of manure from these two places during wet periods is hereby also avoided.

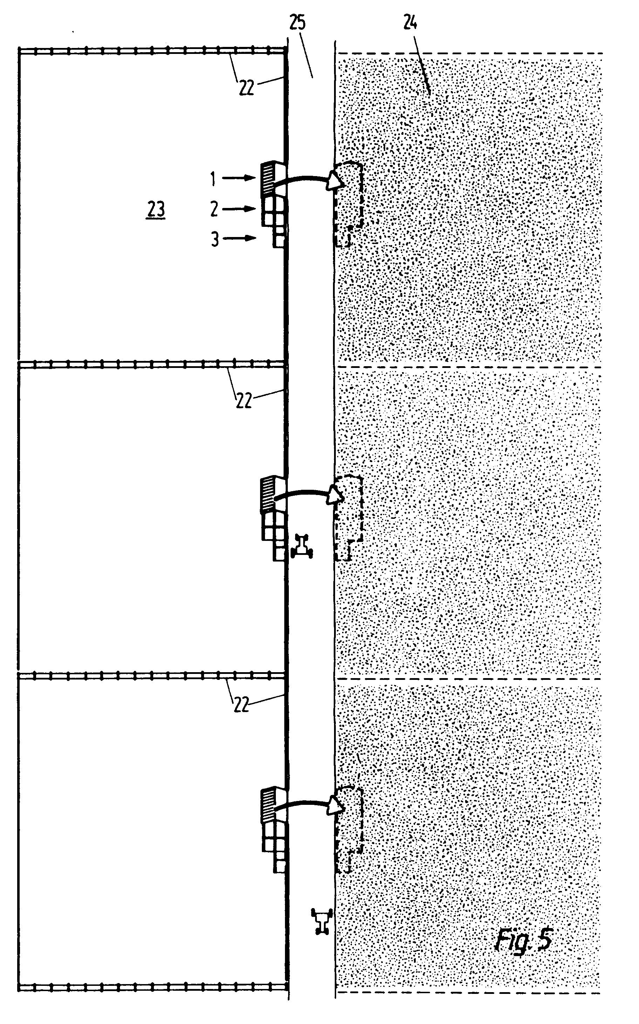

Finally, in Fig. 5 is shown an example of a crop rotation, where pigpen units 1, 2, 3 are placed out to and along a road 25 and with the one long side facing the road. Each of the areas 23 are enclosed by a suitable fence 22 in sections of around 200 m² per pig. The concentration of manure can hereby be kept at a suitable level for the subsequent crops.

When the area has been used for one or two growing seasons, the pigpen unit can be dismantled and moved, for example to the opposite side of the road. Optimum use can thus be made of the crop rotation, in that the pigs effectively clear the soil of all weeds while at the same time fertilizing it. After the rotation, the area can easily be sown with a new crop. When the changeover is made, e.g. every other year, the pigpen units are moved back to the area which has been used for the growing of crops, and the area which has been used by the pigs is sown.

Feeding and supervision can take place from the road, and the pigs can be loaded and transported away through the road door 13. The catching of the pigs is effected easily by closing the field door 13 when the pigs are resting in the piggery, and thus they can be let out quietly and calmly through the road door and transported away.

In practice, therefore, the production of porkers is effected solely by the operation of the two doors 13. The stocking-up with 20-30 piglets is normally effected with the help of a transport container, which is driven out along the road 25 and in through the road door 13 which is thereafter closed.

The field door 13 is similarly held closed for the first few days so that the pigs get accustomed to where they are living. Hereafter, the field door 13 is opened when the pigs want to seek out into the field or for feeding and into the yard and the piggery for the night. If it is desired to catch one or more of the pigs, this is done by closing the field door when the pigs are in the yard, after which they are easily caught. The pigs are caught in the same manner when they are to be slaughtered, in that the transport container is simply placed on the road and the road door 13 is opened, after which the pigs will walk out into the transport container.

With the pigpen unit according to the invention, there is thus achieved a rational operation under the best possible conditions for the pigs.

## Claims

1. A pigpen unit for siting on a fenced-in field area, and comprising a covered piggery (1) with an access opening (9) facing a closed yard placed in extension of the piggery (1), said yard having a door out to the field (23), ***characterized*** in that the piggery (1) is without a floor, and that said closed yard (2) is without a floor and is possibly covered, the pigpen unit comprising a feeding board (3) with trough (17, 18) placed on the external side of the yard (2).

2. A pigpen unit according to claim 1, ***characterized*** in that the piggery (1), the yard (2) and the feeding board (3) are arranged in extension of one another in the formation of a unit with straight side walls (4, 12, 15).

3. A pigpen unit according to claims 1 and 2, ***characterized*** in that the yard (2) is provided with a further door (13), and the feeding board (3) with an opening (27) to the trough (17, 18), said door (13) and opening (27) being arranged in the straight side wall (12, 15).

4. A pigpen unit according to claims 2 and 3, ***characterized*** in that the piggery (1), the yard (2) and the feeding-board (3) are assembled by means of brackets in such a manner that the parts can be separated or folded together.

5. A method for use of a pigpen unit according to claim 1, ***characterized*** in that the pigpen unit is placed in the field (23) with the straight side wall (4, 12, 15) facing a road (25), and that the pigpen unit preferably by crop rotation is moved across the road (25) and placed in a similar position along the road (25) in another field (24).

## Patentansprüche

1. Schweinestallkomplex in einem eingezäunten Feldareal mit einem Stall (1), einem Durchlaß (9), der auf einen geschlossenen Hof geht, der sich an den Stall (1) anschließt. Der Hof hat ein Tor zum Feld (23). Kennzeichnend ist: (1) Der Stall und der geschlossene Hof (2) haben keinen festen Boden, der Hof (2) kann abgedeckt werden; zum Komplex gehört ein Futterbord (3) mit einem Trog (17, 18) an der Außenseite des Hofes (2).

2. Schweinestallkomplex nach Patentanspruch 1, gekennzeichnet dadurch, daß der Stall (1), der Hof (2) und die Futterstelle (3) hintereinander zusammenhängen und eine Einheit mit einer geraden Seitenwand (4, 12, 15) ergeben.

3. Schweinestallkomplex nach Patentansprüchen 1 und 2, gekennzeichnet dadurch, daß der Hof (2) eine weitere Türe (13) und die Futterstelle (3) eine Öffnung (27) zum Trog (17, 18) hat. Die Türe (13) und die Öffnung (27) befinden sich an der geraden Seitenwand (12, 15).

4. Schweinestallkomplex nach Patentansprüchen 2 und 3, gekennzeichnet dadurch, daß der Stall (1), der Hof (2) und die Futterstelle (3) durch Winkelträger zusammengefügt sind, so daß sie auseinandergenommen oder zusammengeklappt werden können.

5. Eine Methode des Gebrauchs eines Schweinestallkomplexes nach Patentanspruch 1, gekennzeichnet dadurch, daß die Einheit auf einem Feld (23) mit der geraden Seitenwand (4, 12, 15) an einer Straße (25) liegt, und daß die Einheit beim Feldwechsel am besten auf die andere Straßenseite (25) in eine ähnliche Position entlang der Straße (25) in einem anderen Feld (24) versetzt werden kann.

## Revendications

1. Ensemble d' étable à porcs à placer dans un champ clôturé et comprenant une maison (1 ) avec une ouverture d' accès (9 ) à une cour fermée placée à la suite de la maison (1 ) ladite cour avant une porte au champ (23 ), **caractérisé** par le fait que la maison (1 ) est sans plancher et que ladite cour fermée (2 ) est sans plancher et éventuellement couverte, l'ensemble d'étable à porcs comprenant un plateau de fourrage (3 ) avec une auge (17 , 18 ) placée du côte extérieur de la cour (2).

2. Ensemble d' étable à porcs conformément à la demande numéro 1 , **caractérisé** par le fait que la maison (1 ) , la cour (2 ) et le plateau de fourrage (3 ) sont placées l'une à côté de l'autre en formant une unité avec une paroi latérale droite (4, 12, 15).

3. Ensemble d' étable à porcs con formément aux demandes numéro 1 et 2, **caractérisé** par le fait que la cour (2 ) est pourvue d' une porte (13 ) supplémentaire et le plateau de fourrage (3 ) d'une ouverture (27 ) prévue pour l'auge (17, 18 ), ladite porte (13 ) et ouverture (27 ) étant placées dans la paroi latérale droite (12, 15 ).

4. Ensemble d'étable à porcs conformément aux demandes numéro 2 et 3, **caractérisé** par le fait que la maison (1 ) , la cour (2 ) et le plateau de fourrage (3 ) sont rassemblées à l'aide de kit de montage de façon à ce que les éléments puissent être séparés ou pliés.

5. Une méthode d'usage d' ensemble d' étable à porcs conformément à la demande numéro 1 , **caractérisé** par le fait que l' ensemble d' étable à porcs est placé dans le champ (23 ) avec la paroi latérale droite (4, 12, 15 ) donnant sur un chemin (25 ) et que l'ensemble d' étable à porcs , est transporté de façon rotative de préférence à l'autre côté du chemin (25 ) et installé dans un endroit semblable le long du chemin (25 ) dans un autre champ (24 ).
